# EUROPÄISCHE PATENTANMELDUNG

(11) **EP 1 947 073 A1**
(43) Veröffentlichungstag der Anmeldung: **23.07.2008**
(21) Anmeldenummer: 07100929.4
(22) Anmeldetag: 22.01.2007
(51) Int. Cl.: C05G 3/00, A01N 25/10

(54) **Zubreitungsform mit verzögerter Freisetzungsrate für wasserlösliche und/oder wasserunlösliche Stoffe**

(71) Anmelder: Mertens, Phillip, 73770 Denkendorf (DE)
(72) Erfinder: Mertens, Phillip, 73770 Denkendorf (DE)
(74) Vertreter: Schreiber, Christoph

(57) **Zusammenfassung**

Die Zubereitungsformen mit verzögerter Freisetzungsrate für wasserlösliche und/oder wasserunlösliche Stoffe wie Düngemittel und/oder Nährstoffe und/oder Schutzstoffe für Pflanzen, Tiere und Mikroorganismen in Aquakulturen enthalten die Stoffe einzeln oder in Form von Gemischen in feinverteilter Form in einem in Wasser unlöslichen Träger, aus dem sie in definierten Mengen über die Zeit und mit stark verminderter Geschwindigkeit abgegeben werden.

## Beschreibung

Gegenstand der vorliegenden Erfindung ist eine Zubereitungsform mit verzögerter Freisetzungsrate für wasserlösliche und/oder wasserunlösliche Stoffe wie Düngemittel und/oder Nährstoffe und/oder Schutzstoffe für Pflanzen, Tiere und Mikroorganismen in Aquakulturen.

Wasserlösliche Düngemittel und/oder Nährstoffe und oder Schutzstoffe für Pflanzen, Tiere und Mikroorganismen in Aquakulturen sollten nach Möglichkeit über einen längeren Zeitraum mit annähernd gleichen Konzentrationen zur Verfügung stehen, um optimale Bedingungen des Wachstums und der Gesunderhaltung zu gewährleisten.

Dieses kann unter anderem dadurch erfolgen, dass die Düngemittel und/oder Nährstoffe und/oder Schutzstoffe entsprechend dosiert kontinuierlich oder in kleineren Portionen zudosiert werden. Dieses erfordert aber einen erheblichen Aufwand und zumindest hohe Kosten. Prinzipiell besteht die Aufgabe, Zubereitungsformen zu entwickeln, aus denen die Düngemittel und/oder Nährstoffe und/oder Schutzstoffe auch in wässrige, insbesondere wässrig strömende Medien, nämlich Aquakulturen, so verzögert freigesetzt werden, dass sie in definierten Mengen über die Zeit, d.h. über einen längeren Zeitraum in annähernd gleichen Konzentrationen freigesetzt und damit zur Verfügung gestellt werden. Es ist aber bisher keine Methode bekannt, die generell für alle wasserlöslichen und/oder wasserunlöslichen Düngemittel und/oder Nährstoffe und/oder Schutzstoffe zur Anwendung kommt.

Aus der Offenlegungsschrift 1 592 755 ist ein Düngemittel mit verzögerter Düngemittelabgabe bekannt, welches Harnstoff und andere Düngemittel in Polyurethanschäumen enthält. Dieses Düngemittel ist für den Einsatz in Erdekulturen geeignet, da hierbei über die in der Erde vorhandene Feuchtigkeit der eingelagerte Harnstoff langsam freigesetzt werden kann.

Dieses Düngemittel ist vollkommen ungeeignet für Aquakulturen, da unter dem Einfluss wässriger oder strömender wässriger Medien wegen der offenporigen Schaumstruktur des Polymeren das Düngemittel schnell herausgelöst werden kann und eine definierte verzögernde Düngemittelabgabe nicht eintritt.

Weiterhin ist aus der Auslegeschrift 1 299 662 ein Pflanzenwachstumsmedium, besonders geeignet für Topfpflanzen, bekannt, das ebenfalls aus Polyurethanschaum als dem tragenden Polymer beruht und das sich als Erdeersatz zur Pflanzenaufzucht eignet. In diesem System sind die Düngemittel chemisch an Ionenaustauscherharze gebunden, wobei unter Einfluss von Feuchtigkeit in erdigen Systemen die Düngemittelionen von Ionenaustauscher langsam angegeben werden.

In wässrigen oder strömenden wässrigen Medien aber erfolgt wegen der Schaumstruktur des tragenden Polymeren und dem dadurch bedingten leichten Wasserzutritt in wenigen Stunden oder Tagen ein viel zu schneller Austrag der enthaltenden Düngemittel.

Beide hier genannten Düngemittelsysteme sind somit für den Einsatz in wässrigen oder strömenden wässrigen Medien wie Aquakulturen nicht geeignet, da der Düngemittelaustritt zu schnell erfolgt und eine Düngung mit flüssigem oder pulverigem reinen Dünger gleich kommt.

Die Erfindung hat sich somit vor allem die Aufgabe gestellt, neue Zubereitungsformen mit stärker verzögerter Freisetzungsrate für wasserlösliche und/oder wasserunlösliche Düngemittel und/oder Nährstoffe und/oder Schutzstoffe für Pflanzen, Tiere und Mikroorganismen in Aquakulturen zu entwickeln, die einfach und kostengünstig herstellbar sind und jeweils so modifiziert werden können, dass sie auch in wässriger, insbesondere auch strömenden Medien wie Aquakulturen eingesetzt werden können. Die Freisetzung sollte in definierten Mengen über die Zeit und erst während mehrerer Tage und Wochen erfolgen. Dabei ist weiterhin zu beachten, dass alle verwendeten Materialien umweltfreundlich und unschädlich sind, keine Nebenwirkungen auslösen und gegebenenfalls leicht entsorgt oder sogar recycelt werden können. Weiterhin sollten nach Möglichkeit auch wasserunlösliche und nahezu wasserunlösliche Stoffe mit zur Verfügung gestellt werden.

Diese Aufgaben werden dadurch gelöst, dass die wasserlöslichen und/oder wasserunlöslichen Stoffe wie Düngemittel und/oder Nährstoffe und/oder Schutzstoffe einzeln oder in Form von Gemischen in feinverteilter Form in einem in Wasser unlöslichen Träger vorliegen, aus dem sie nur mit stark verminderter Geschwindigkeit, nämlich mehreren Tagen oder Wochen, herausgelöst oder herausgewaschen werden. Vorzugsweise besteht der Träger aus einem organischen Polymerisat.

Die Stoffe werden in Aquakulturen, d.h. in stehendem oder bewegtem Wasser innerhalb von mehren Tagen bis zu mehreren Monaten freigesetzt, bevorzugt zwischen 4 Tagen und 4 Monaten.

Dieses Polymerisat kann vorliegen als Duroplast, Thermoplast oder als Elastomer.

Als Elastomere kommen insbesondere polymere Naturkautschuke und bevorzugt Silikonkautschuke in Frage, die nach der Vernetzung und völlig wasserunlöslich werden. Nach der Auslaugung der eingelagerten Stoffe können diese Träger umweltfreundlich entsorgt oder recycelt werden.

Die Freisetzung der Düngemittel und/oder Nährstoffe und/oder Schutzstoffe erfolgt im Gegensatz zu den offenporigen Polyurethanschäumen des Standes der Technik durch Permeation durch die relativ dünnen Wände des Polymerisats, welche die feinverteilten Stoffe allseitig umgeben. Die silikatischen Modifizierungskomponenten ermöglichen überraschenderweise auch den langsamen Austritt der praktisch wasserunlöslichen Stoffe, nicht jedoch der wasserunlöslichen Träger.

Die feinverteilte Form der Stoffe entsteht beispielsweise schon bei der Herstellung durch Kristallisation oder durch mechanisches Vermahlen.

Um die Freisetzungsraten zu modifizieren, können diesen Komponenten vor der Polymerisation oder Vernetzung zusätzlich silikatische Modifizierungskomponenten wie kristalline Kieselsäuren, Metallsilikate Molekularsiebe und Schichtsilikate zugesetzt werden. Die silikatischen Modifizierungskomponenten dienen der Steuerung der Freisetzung der Düngemittel und/oder Nährstoffe und/oder Schutzstoffe, sowie der enthaltenen Spurenelemente. Überwiegend als Streckungsmittel wirken Zusätze von Kalziumcarbonat, Bariumsulfat, Kalziumsulfat, Siliziumdioxid und nicht kristalline Kieselsäuren sowie Gemische derselben.

Den Zubereitungen können weiterhin Wirkungsverstärker bzw. Wirkungsvermittler zugesetzt werden. Besonders geeignet sind hierfür Netzmittel und Chelatbildner. Beispiele hierfür sind EDTA, HEEDTA, DTPA, NTA und deren Salze sowie mehrzähnige Substanzen.

Zu den erfindungsgemäß verwendeten wasserlöslichen Düngemitteln und Nährstoffen zählen zunächst die Salze der Elemente der ersten und zweiten Hauptgruppe sowie verschiedener Nebengruppen des Periodensystems, nämlich Natrium, Kalium, Calcium und Magnesium, Eisen, Mangan, Zink, Kupfer, Nickel, Kobalt, Molybdän, Zinn, Bor, Vanadium. Weiterhin zählen hierzu auch die Ammoniumsalze mit den anorganischen und organischen Anionen wie Chlorid, Sulfat, Nitrat, Phoshat, Borat, Molybdat, Fluorid, Jodid, Vanadat, Stannat, Acetat, Zitrat, Gluconat, Maleat, Adipat, einige Oxide und Hydroxide sowie Harnstoff.

Im Rahmen der durchgeführten Untersuchungen wurde auch festgestellt, dass Wirkstoffe zum Pflanzen- und Tierschutz, wie Mittel zur Desinfektion (z. B. Malachitgrünoxalat, Kristallviolett und Methylenblau), oder Mittel gegen Parasiten (z.B. Metronidazol, Flubendazol und Mebendazol), als Einzelstoffe oder auch miteinander in Kombination und/oder in Kombination mit Pflanzen-Düngemitteln in polymere Träger eingebracht werden können, aus denen sie bei Kontakt mit wässrigen oder strömenden wässrigen Systemen definiert über längere Zeit abgegeben werden.

Die Zubereitungen und die Freisetzungsraten können weiterhin modifiziert werden durch chemisch inaktive und untoxische Weichmacher wie Silikonöle, paraffinische Öle, Phtalate und/oder Adipate des Glykols oder des Glycerins sowie Fettsäureester.

Die Zubereitungen enthalten die Düngemittel und/oder Nährstoffe in Mengen von 0,1 bis 60 Gew.%, vorzugsweise in Mengen von 1 bis 50 Gew.%. Die Wirkungsverstärker bzw. Wirkungsvermittler sind vorzugsweise nur in Mengen von 0,1 bis 10 Gew.%, insbesondere in Mengen von 0,5 bis 5 Gew.% vorhanden.

Sofern Weichmacher enthalten sind, betragen ihre Mengen 1 bis 30 Gew.%, insbesondere 3 bis 25 Gew.%.

Typische Zusammensetzungen sind somit (in Teilen):

| | |
|---|---|
| Polymer | 100 |
| Modifizierungskomponenten | 0 - 150 |
| Depot-Düngemittel | 5 - 220 |
| Depot-Tier- und Pflanzenschutzstoffe | 0-50 |
| Wirkungsverstärker | 0-20 |
| Streck- und Verarbeitungshilfsmittel | 0-50 |

Die fertigen Zubereitungen sind vorzugsweise konfektioniert und in werden in Form von Tabletten, Granulaten, Schuppen oder Strangpresslingen zur Anwendung gebracht.

Die Herstellung der neuen Zubereitungsformen erfolgt vorzugsweise, indem die Stoffe entweder zuvor mit den silikatischen Modifizierungskomponenten zusammengebracht und dabei an diese angelagert oder in diese eingelagert werden und dann mit dem organischen Träger vermischt oder direkt als Gemisch mit dem organischen Träger vermischt werden. Diese Polymerisation erfolgt vorzugsweise durch Katalysatoren und/oder Vernetzungsmittel. Sie kann aber auch durch energiereiche Strahlen, insbesondere durch alpha- oder beta-Strahlen erfolgen. Hierbei können Strahlendosen von 10 bis 200 kGy zur Anwendung kommen.

Als nicht vernetzte aber vernetzbare Substanzen haben sich vor allem Naturkautschuke und Silikonkautschuke bewährt.

Da die Zubereitungsformen meistens zu Tabletten, Granulaten, Schuppen oder Strangpresslingen konfektioniert werden, kann diese Konfektionierung auch mit noch nicht ausreichend vernetzten Zwischenprodukten durchgeführt werden. Die dann notwendige weitere Polymerisation bzw. Vernetzung kann danach auch noch bei den bereits konfektionierten Produkten erfolgen.

Die erfindungsgemäß erzielten Verzögerungen der Freisetzung der einzelnen Düngemittel und/oder Nährstoffe und/oder Schutzstoffe können in üblicher Weise bestimmt werden. Falls erforderlich kann dementsprechend die Zusammensetzung und die Herstellung so modifiziert werden, dass die angestrebten Eigenschaften für den jeweiligen Anwendungsbereich recht genau erzielt werden.

Die verbrauchten, vom Wasser ausgelaugten Produkte bestehen aus in Wasser unlöslichen Polymeren. Diese können aus dem Aquasystem leicht abgetrennt und entweder entsorgt oder recycelt werden.

Verwendung einer Zubereitungsform mit verzögerter Freisetzungsrate mit einem
- in Wasser unlöslichen Träger und
- Stoffen ausgewählt aus Düngemitteln, Nährstoffen, Schutzstoffen und Mischungen davon
zum Eintrag von Düngemitteln, Nährstoffen und Schutzstoffen in Aquakulturen.

## Patentansprüche

1. Zubereitungsform mit verzögerter Freisetzungsrate für wasserlösliche und/oder wasserunlösliche Stoffe wie Düngemittel und/oder Nährstoffe und/oder Schutzstoffe für Pflanzen, Tiere und Mikroorganismen in Aquakulturen, **dadurch gekennzeichnet, dass** die Stoffe einzeln oder in Form von Gemischen miteinander in feinverteilter Form in einem in Wasser unlöslichen Träger vorliegen, aus dem sie in definierten Mengen über die Zeit und mit stark verminderter Geschwindigkeit abgegeben werden.

2. Zubereitungsform gemäß Anspruch 1, **dadurch gekennzeichnet, dass** der Träger ein organisches Polymerisat ist.

3. Zubereitungsform gemäß Anspruch 1 oder 2, **dadurch gekennzeichnet, dass** die Stoffe in dem Träger im Gemisch mit silikatischen Modifizierungskomponenten aus der Gruppe der kristallinen Kieselsäuren, Metallsilikate, Molekularsiebe und Schichtsilikate vorliegen.

4. Zubereitungsform gemäß einem der Ansprüche 1 bis 3, **dadurch gekennzeichnet, dass** das Polymerisat ein organischer Duroplast, Thermoplast oder ein Elastomer ist.

5. Zubereitungsform gemäß einem der Ansprüche 1 bis 4, **dadurch gekennzeichnet, dass** die Stoffe anorganische Düngesalze und/oder Spurenelemente und/oder organische Nährstoffe enthalten.

6. Zubereitungsform gemäß einem der Ansprüche 1 bis 5, **dadurch gekennzeichnet, dass** sie zusätzlich Wirkungsverstärker bzw. Wirkungsvermittler enthalten.

7. Zubereitungsform gemäß Anspruch 6, **dadurch gekennzeichnet, dass** die Wirkungsvermittler bzw. Wirkungsvermittler Netzmittel oder Chelatbildner sind.

8. Zubereitungsform gemäß einem der Ansprüche 1 bis 7, **dadurch gekennzeichnet, dass** sie in Form von Tabletten, Granulaten, Schuppen oder Strangpresslingen vorliegen.

9. Verfahren zur Herstellung von Zubereitungsformen gemäß Ansprüchen 1 bis 8, **dadurch gekennzeichnet, dass** die Stoffe entweder zuvor mit der silikatischen Modifizierungskomponente zusammengebracht und dabei an diese angelagert oder in diese eingelagert und dann mit einem organischen polymerisierbaren oder vernetzbaren Träger vermischt werden oder dass diese Stoffe und die Modifizierungskomponenten direkt mit einem polymerisierbaren oder vernetzbaren Träger vermischt werden, um danach durch Polymerisation oder Vernetzung verfestigt zu werden.

10. Verfahren gemäß Anspruch 9, **dadurch gekennzeichnet, dass** die Polymerisation oder Vernetzung durch Katalysatoren, durch Vernetzungssysteme oder durch energiereiche Strahlen, insbesondere durch alpha- oder beta-Strahlen, ausgelöst wird.

11. Verfahren gemäß Anspruch 10, **dadurch gekennzeichnet, dass** die energiereichen Strahlen in Strahlendosen von 10 - 200 kGy eingesetzt werden.

12. Verfahren gemäß einem der Ansprüche 9 bis 11, **dadurch gekennzeichnet, dass** als vernetzbare Substanzen Naturkautschuke oder Silikonkautschuke verwendet werden.

13. Verfahren gemäß einem der Ansprüche 9 bis 12, **dadurch gekennzeichnet, dass** den Zubereitungsformen vor der Polymerisation oder Vernetzung Weichmacher zugesetzt werden.

14. Verfahren gemäß einem der Ansprüche 9 bis 13, **dadurch gekennzeichnet, dass** das Reaktionsgemisch vor oder erst nach der vollständigen Polymerisation bzw. Vernetzung zu Tabletten, Granulaten, Schuppen oder Strangpresslingen konfektioniert wird.

15. Verwendung einer Zubereitungsform mit verzögerter Freisetzungsrate mit einem
- in Wasser unlöslischen Träger und
- Stoffen ausgewählt aus Düngemitteln, Nährstoffen, Schutzstoffen und Mischungen davon
zum Eintrag von Düngemitteln, Nährstoffen und Schutzstoffen in Aquakulturen.
